(19) **Europäisches Patentamt / European Patent Office / Office européen des brevets**

(11) **EP 4 080 624 A1**

(12) **EUROPEAN PATENT APPLICATION**
published in accordance with Art. 153(4) EPC

(43) Date of publication:
**26.10.2022 Bulletin 2022/43**

(21) Application number: **20903341.4**

(22) Date of filing: **19.10.2020**

(51) International Patent Classification (IPC):
**H01M 8/021** (2016.01)   **H01M 8/0228** (2016.01)
**C22C 38/18** (2006.01)   **C22C 32/00** (2006.01)
**C23C 22/50** (2006.01)   **C25F 1/00** (2006.01)

(52) Cooperative Patent Classification (CPC):
**C22C 32/00; C22C 38/18; C23C 22/50; C25F 1/00;
H01M 8/021; H01M 8/0228;** Y02E 60/50;
Y02P 70/50

(86) International application number:
**PCT/KR2020/014221**

(87) International publication number:
**WO 2021/125533 (24.06.2021 Gazette 2021/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.12.2019 KR 20190171197**

(71) Applicant: **POSCO
Donghaean-ro, Nam-gu, Pohang-si
Gyeongsangbuk-do
37859 (KR)**

(72) Inventors:
• **KIM, Jong-hee
Daejeon 34200 (KR)**
• **SEO, Bo-sung
Pohang-si Gyeongsangbuk-do 37656 (KR)**
• **KIM, Jin-suk
Pohang-si Gyeongsangbuk-do 37671 (KR)**

(74) Representative: **Potter Clarkson
The Belgrave Centre
Talbot Street
Nottingham NG1 5GG (GB)**

(54) **STAINLESS STEEL HAVING EXCELLENT SURFACE ELECTRICAL CONDUCTIVITY FOR FUEL CELL SEPARATOR AND METHOD FOR MANUFACTURING SAME**

(57)   Disclosed is a stainless steel having excellent surface electrical conductivity for a fuel cell separator. According to an embodiment of the disclosed stainless steel having excellent surface electrical conductivity for a fuel cell separator, a value of the following surface oxide atomic ratio (1) may be 0.08 or more, as measured on the surface of a stainless steel containing 15 wt% or more of Cr by X-ray angle-resolved photoemission spectroscopy using an Al-K$\alpha$ X-ray source under the condition where a take-off angle of photoelectrons is from 12° to 85°.

$$(1) \quad \frac{\text{sum of atomic concentrations (at\%) of Cr in Cr hydroxide}}{\text{sum of atomic concentrations (at\%) of metal elements in total oxides and hydroxides}}$$

The Cr hydroxide represents $CrOOH$, $Cr(OH)_2$, or $Cr(OH)_3$. The total oxides and hydroxides include a Cr oxide, the Cr hydroxide, an Fe oxide, an Fe hydroxide, and a metal oxide (MO), and the metal oxide (MO) includes a mixed oxide, wherein M represents an alloying element other than Cr and Fe or a combination thereof in a matrix, and O represents oxygen.

EP 4 080 624 A1

【FIG. 1A】

VALUE OF SURFACE OXIDE ATOMIC RATIO (1)

**Description**

[Technical Field]

The present disclosure relates to a stainless steel having excellent surface electrical conductivity and a manufacturing method therefor, and more particularly, to a stainless steel having excellent surface electrical conductivity for a fuel cell separator and a manufacturing method therefor.

[Background Art]

Due to excellent corrosion resistance and ease of processing, stainless steels have been considered as materials for electronic parts and fuel cell separators. However, conventional stainless steels have a problem of insufficient electric conductivity because a passivated layer formed on the surface serves as a through-plane resistance factor.

The mechanism of the effect of a passivated layer on surface electrical conductivity of a stainless steel has not been clearly identified to date. Ni plating may be conducted for materials for electronic parts to enhance surface electrical conductivity of such a passivated layer, or a process of coating a conductive material such as gold, carbon, and a nitride on the surface of a stainless steel has been proposed to reduce high contact resistance of the stainless steel for fuel cell separators. However, there are a problem in that manufacturing costs and time increase due to an additional process for the Ni plating or the coating with other coating materials, thereby deteriorating productivity, and a problem in that fundamental through-plane resistance of a passivated layer cannot be reduced.

In addition, as another method for improving surface electrical conductivity of a stainless steel, a method of refining the surface of the stainless steel has been attempted.

Patent Document 1 discloses a stainless steel having a low interface contact resistance and high corrosion potential for a separator by controlling a surface refining process.

Patent Document 2 discloses a method for manufacturing a stainless steel having excellent corrosion resistance and low contact resistance by immersing a stainless steel including 17 to 23 wt% of Cr in a [HF]≥[HNO$_3$] solution.

Patent Document 3 discloses a stainless steel including 15 to 45 wt% of Cr and 0.1 to 5 wt% of Mo, wherein an atomic ratio of Cr to Fe contained in a passivated layer of the stainless steel is 1 or more.

However, the methods disclosed in Patent Documents 1 to 3 have limitations because fundamental through-plane resistance of the passivated layer of a stainless steel cannot be lowered by only controlling the Cr/Fe atomic ratio of the passivated layer within a several nm region.

(Patent Document 0001) Korean Patent Application Laid-open Publication No. 10-2014-0081161 (July 1, 2014)
(Patent Document 0002) Korean Patent Application Laid-open Publication No. 10-2013-0099148 (September 5, 2013)
(Patent Document 0003) Japanese Patent Application Laid-open Publication No. 2004-149920 (May 27, 2004)

[Disclosure]

[Technical Problem]

To solve the above-described problems, provided is a stainless steel having excellent surface electrical conductivity for a fuel cell separator applicable to materials for electrical contacts and materials for fuel cell separators and a manufacturing method thereof.

[Technical Solution]

In accordance with an aspect of the present disclosure to achieve the above-described objects, provided is a stainless steel having excellent surface electrical conductivity for a fuel cell separator, a value of the following surface oxide atomic ratio (1) may be 0.08 or more, as measured on a surface of the stainless steel containing 15 wt% or more of Cr by X-ray angle-resolved photoemission spectroscopy using an Al-Kα X-ray source under the condition where a take-off angle of photoelectrons is from 12° to 85°.

$$(1) \quad \frac{\text{sum of atomic concentrations (at\%) of Cr in Cr hydroxide}}{\text{sum of atomic concentrations (at\%) of metal elements in total oxides and hydroxides}}$$

The Cr hydroxide represents CrOOH, $Cr(OH)_2$, or $Cr(OH)_3$. The total oxides and hydroxides include a Cr oxide, the Cr hydroxide, an Fe oxide, an Fe hydroxide, and a metal oxide (MO), and the metal oxide (MO) includes a mixed oxide, wherein M represents an alloying element other than Cr and Fe or a combination thereof in a matrix, and O represents oxygen.

In the stainless steel having excellent surface electrical conductivity for a fuel cell separator of the present disclosure, the value of the surface oxide atomic ratio (1) may be 0.2 or more.

In the stainless steel having excellent surface electrical conductivity for a fuel cell separator of the present disclosure, a bandgap energy of a surface oxide layer of the stainless steel may be 2 eV or less.

In the stainless steel having excellent surface electrical conductivity for a fuel cell separator of the present disclosure, the surface oxide layer of the stainless steel may form an ohmic contact with the matrix.

In accordance with another aspect of the present disclosure to achieve the above-described objects, provided is a method for manufacturing a stainless steel for fuel cell separators with excellent electrical conductivity, the method including a primary surface treatment performing by immersing a cold-rolled stainless steel sheet in a nonoxidizing acid solution or conducting an electrolytic treatment after the immersing, and a secondary surface treatment performed by immersing the cold-rolled stainless steel sheet in an oxidizing acid solution, wherein a value of the following surface oxide atomic ratio (1) may be 0.08 or more, as measured on a surface of the stainless steel containing 15 wt% or more of Cr by X-ray angle-resolved photoemission spectroscopy using an Al-K$\alpha$ X-ray source under the condition where a take-off angle of photoelectrons is from 12° to 85°.

$$(1) \quad \frac{\text{sum of atomic concentrations (at\%) of Cr in Cr hydroxide}}{\text{sum of atomic concentrations (at\%) of metal elements in total oxides and hydroxides}}$$

The Cr hydroxide represents CrOOH, $Cr(OH)_2$, or $Cr(OH)_3$. The total oxides and hydroxides include a Cr oxide, the Cr hydroxide, an Fe oxide, an Fe hydroxide, and a metal oxide (MO), and the metal oxide (MO) includes a mixed oxide, wherein M represents an alloying element other than Cr and Fe or a combination thereof in a matrix, and O represents oxygen.

In the method for manufacturing the stainless steel having excellent surface electrical conductivity for fuel cell separators, the primary surface treatment is performed by immersing a cold-rolled stainless steel sheet in a nonoxidizing acid solution for 5 seconds or more, or performing an electrolytic treatment at a current density of 0.1 $A/cm^2$ or more for 5 seconds or more after the immersing, and the nonoxidizing acid solution may be a 5 wt% or more hydrochloric acid or sulfuric acid solution at 50°C or higher.

In the method for manufacturing the stainless steel having excellent surface electrical conductivity for fuel cell separators, the secondary surface treatment includes immersing the cold-rolled stainless steel sheet in the oxidizing acid solution for 5 seconds or more, and the oxidizing acid solution may be a 5 wt% or more nitric acid solution at 50°C or higher.

[Advantageous Effects]

The present disclosure may provide a stainless steel having excellent surface electrical conductivity for a fuel cell separator applicable to materials for electrical contacts and materials for fuel cell separators by making a surface oxide layer, which is formed on the surface of the stainless steel and has semiconductor characteristics, into a conductor, and a manufacturing method thereof.

The present disclosure may also provide a stainless steel having excellent surface electrical conductivity for a fuel cell separator and having a bandgap energy of a surface oxide layer of 2 eV or less by controlling a value of the following surface oxide atomic ratio (1) to 0.08 or more, as measured on the surface of the stainless steel by X-ray angle-resolved photoemission spectroscopy using an Al-K$\alpha$ X-ray source under the condition where a take-off angle of photoelectrons is from 12° to 85°.

$$(1) \quad \frac{\text{sum of atomic concentrations (at\%) of Cr in Cr hydroxide}}{\text{sum of atomic concentrations (at\%) of metal elements in total oxides and hydroxides}}$$

The Cr hydroxide represents CrOOH, $Cr(OH)_2$, or $Cr(OH)_3$. The total oxides and hydroxides include a Cr oxide, the Cr hydroxide, an Fe oxide, an Fe hydroxide, and a metal oxide (MO), and the metal oxide (MO) includes a mixed oxide, wherein M represents an alloying element other than Cr and Fe or a combination thereof in a matrix, and O represents oxygen.

According to the present disclosure, the surface oxide layer of the stainless steel may form an ohmic contact with the matrix, thereby providing a stainless steel having excellent surface electrical conductivity for fuel cell separators.

[Description of Drawings]

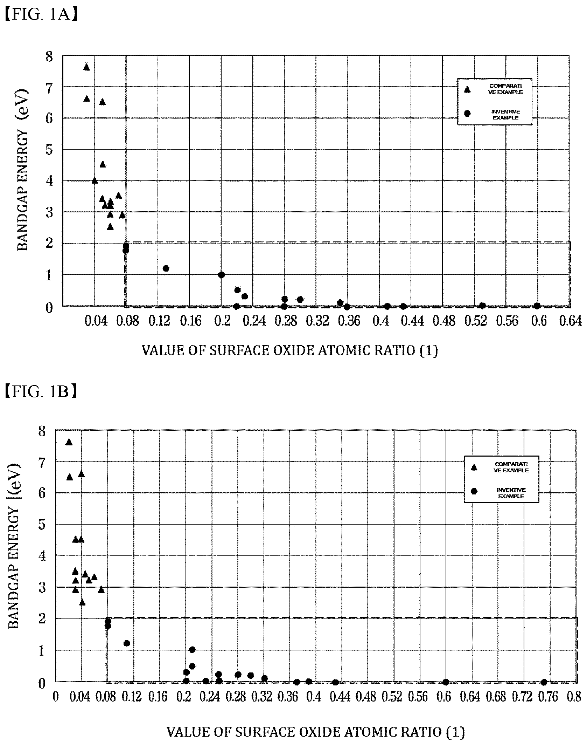

FIGS. 1A and 1B are graphs illustrating relationship between bandgap energy and surface oxide atomic ratio (1) with reference to the results of Table 2.

[Best Mode]

Provided is a stainless steel having excellent surface electrical conductivity for a fuel cell separator, wherein a value of the following surface oxide atomic ratio (1) may be 0.08 or more, as measured on the surface of a stainless steel containing 15 wt% or more of Cr by X-ray angle-resolved photoemission spectroscopy using an Al-K$\alpha$ X-ray source under the condition where a take-off angle of photoelectrons is from 12° to 85°.

$$(1) \quad \frac{\text{sum of atomic concentrations (at\%) of Cr in Cr hydroxide}}{\text{sum of atomic concentrations (at\%) of metal elements in total oxides and hydroxides}}$$

The Cr hydroxide represents $CrOOH$, $Cr(OH)_2$, or $Cr(OH)_3$. The total oxides and hydroxides include a Cr oxide, the Cr hydroxide, an Fe oxide, an Fe hydroxide, and a metal oxide (MO), and the metal oxide (MO) includes a mixed oxide, wherein M represents an alloying element other than Cr and Fe or a combination thereof in a matrix, and O represents oxygen.

[Modes of the Invention]

Hereinafter, embodiments of the present disclosure will be described in detail with reference to the accompanying drawings. The embodiments of the present disclosure may, however, be embodied in many different forms and should not be construed as being limited to the embodiments set forth herein. Rather, these embodiments are provided so that this disclosure will be thorough and complete, and will fully convey the concept of the invention to those skilled in the art.

Also, the terms used herein are merely used to describe particular embodiments. An expression used in the singular encompasses the expression of the plural, unless otherwise indicated. Throughout the specification, the terms such as "including" or "having" are intended to indicate the existence of features, operations, functions, components, or combinations thereof disclosed in the specification, and are not intended to preclude the possibility that one or more other features, operations, functions, components, or combinations thereof may exist or may be added.

Meanwhile, unless otherwise defined, all terms used herein have the same meaning as commonly understood by one of ordinary skill in the art to which this disclosure belongs. Thus, these terms should not be interpreted in an idealized or overly formal sense unless expressly so defined herein. As used herein, the singular forms are intended to include the plural forms as well, unless the context clearly indicates otherwise.

The terms "about", "substantially", etc. used throughout the specification means that when a natural manufacturing and a substance allowable error are suggested, such an allowable error corresponds the value or is similar to the value, and such values are intended for the sake of clear understanding of the present invention or to prevent an unconscious infringer from illegally using the disclosure of the present invention.

Also, as used herein, the term "cold-rolled stainless steel sheet" refers to a cold-rolled stainless steel sheet manufactured by a common manufacturing method for stainless steels including hot rolling-heating-cold rolling-annealing and may be interpreted as a cold-rolled stainless steel sheet manufactured by a common method for manufacturing cold-rolled stainless steel sheets within a range clearly recognized by those skilled in the art.

Also, as used herein, the term "surface oxide" refers to an oxide formed on the surface of a stainless steel as a result of spontaneous oxidization of metal element contained in the matrix by external oxygen in the case where the stainless steel is exposed to a temperature of about 200°C or below. The surface oxide may include $Cr_2O_3$ as a main element and may include $SiO_2$, $SiO$, $Si_2O3$, $MnO$, $MnO_2$, $Mn_2O_3$, $VO$, $V_2O_3$, $V_2O_5$, $NbO$, $NbO_2$, $Nb_2O_5$, $TiO_2$, $FeO$, $Fe_2O_3$, and $Fe_3O_4$. Although examples of the surface oxide are given above, it is to be noted that these examples are made only for illustrative purposes, and the present disclosure is not to be construed as being limited to those examples.

Also, as used herein, the term "surface oxide layer" refers to a layer including a surface oxide according to the present disclosure and may also be interpreted as a passivated layer of a stainless steel.

Also, as used herein, the "Fe oxide" refers to any Fe oxide in the form of an oxide of Fe within a range that may be clearly recognized by those of ordinary skill in the art such as FeO, $Fe_2O_3$, and $Fe_3O_4$. The "Fe hydroxide" refers to any Fe hydroxide in the form of a hydroxide of Fe within a range that may be clearly recognized by those of ordinary skill in that art such as FeOOH, $Fe(OH)_2$-, and $Fe(OH)_3$.

Also, as used herein, the "Cr oxide" refers to any Cr oxide in the form of an oxide of Cr within a range that may be clearly recognized by those of ordinary skill in the art such as $Cr_3O_4$, $Cr_2O_3$, $CrO_2$, and $CrO_3$.

It is known that a passivated layer of conventional stainless steels has a high resistance due to semiconductor properties of an oxide. The present inventors have developed a stainless steel having excellent surface electrical conductivity for a fuel cell separator applicable to materials for electrical contacts and fuel cell separators by making a surface oxide layer having semiconductor properties into a conductor by controlling a bandgap energy of the surface oxide layer to 2 eV or less.

According to an embodiment of the present disclosure, a value of the following surface oxide atomic ratio (1) may be 0.08 or more, as measured on the surface of the stainless steel by X-ray angle-resolved photoemission spectroscopy (ARPES) using an Al-K$\alpha$ X-ray source under the condition where a take-off angle of photoelectrons is from 12° to 85°.

$$(1) \quad \frac{\text{sum of atomic concentrations (at\%) of Cr in Cr hydroxide}}{\text{sum of atomic concentrations (at\%) of metal elements in total oxides and hydroxides}}$$

The Cr hydroxide represents CrOOH, $Cr(OH)_2$, or $Cr(OH)_3$. The total oxides and hydroxides include a Cr oxide, the Cr hydroxide, an Fe oxide, an Fe hydroxide, and a metal oxide (MO), and the metal oxide (MO) includes a mixed oxide, wherein M represents an alloying element other than Cr and Fe or a combination thereof in a matrix, and O represents oxygen.

The metal oxide (MO) may be, for example, $SiO_2$, SiO, $Si_2O_3$, MnO, $MnO_2$, $Mn_2O_3$, VO, $V_2O_3$, $V_2O_5$, NbO, $NbO_2$, $Nb_2O_5$, or $TiO_2$. Although examples of the metal oxide (MO) are listed above, the examples are only intended to illustrate the present disclosure in more detail and are not intended to limit the scope of the present disclosure.

Hereinafter, reasons for numerical limitations on the take-off angle of photoelectrons in the X-ray angle-resolved photoemission spectroscopy will be described, and then reasons for numerical limitations on the value of surface oxide atomic ratio (1) will be described.

In the X-ray angle-resolved photoemission spectroscopy, as the take-off angle of photoelectrons decreases, an analysis depth in a depth direction from the outermost surface of the stainless steel decreases and as the take-off angle increases, the analysis depth increases. In consideration thereof, the surface of the stainless steel may be measured by X-ray angle-resolved photoemission spectroscopy using an Al-K$\alpha$ X-ray source under the condition where the take-off angle of photoelectrons is from 12° to 85° according to an embodiment to analyze the composition of the total oxides formed on the surface of the stainless steel regardless of the thickness of the stainless steel.

The reason why the value of the surface oxide atomic ratio (1) measured under the above-described conditions is limited to be 0.08 or more is that the passivated layer is a critical point for conversion from semiconductor properties into conductor properties. When the value of the surface oxide atomic ratio (1) is less than 0.08, the stainless steel is not suitable due to semiconductor properties of the passivated layer. In order to obtain a stainless steel with excellent surface electrical conductivity, it is preferable to control the value of the surface oxide atomic ratio (1) from 0.08 to 0.6.

By controlling the value of the surface oxide atomic ratio (1) to 0.08 or more, the bandgap energy of the surface oxide layer may be adjusted to be 2 eV or less in the present disclosure. When the bandgap energy is 0 eV, the surface oxide layer has conductor properties. When the bandgap energy is more than 0 eV and not more than 2 eV, the surface oxide layer has intermediate properties between semiconductor properties and conductor properties, and thus the stainless steel may be suitable for fuel cell separators.

In addition, according to the present disclosure, it is preferable to control the value of the surface oxide atomic ratio (1) to 0.2 or more to adjust the bandgap energy of the surface oxide layer to 0 eV. The bandgap energy of the surface oxide layer of 0 eV means that the matrix and the surface oxide layer of the stainless steel forms a new ohmic contact, which has not been previously known, although the passivated layer consists of oxides. In other words, it means that a new conductive coating layer, in which the surface oxide layer forms an ohmic contact with the matrix of the stainless steel, is formed.

In the stainless steel having excellent surface electrical conductivity for a fuel cell separator according to the present disclosure, the bandgap energy of the surface oxide layer may be 2 eV or less, and the steel type is not particularly limited. According to an embodiment, an austenitic stainless steel, a ferritic stainless steel, and a ferritic-austenitic dual-phase stainless steel may be used as the stainless steel of the present disclosure.

In addition, the composition of alloying elements of the stainless steel for fuel cell separators having excellent surface electrical conductivity according to the present disclosure is not particularly limited. However, a preferred composition is as follows. On the other hand, it is necessary to note that the following composition of the alloying elements is only intended to assist understanding of the present disclosure in more detail and are not intended to limit the scope of the present disclosure.

According to an embodiment, the stainless steel according to the present disclosure may include, in percent by weight (wt%), more than 0% and not more than 0.3% of C, more than 0% and not more than 0.3% of N, more than 0% and not more than 0.7% of Si, more than 0% and not more than 10% of Mn, more than 0% and not more than 0.04% of P, more than 0% and not more than 0.02% of S, 15 to 34% of Cr, 25% or less of Ni, and the remainder of Fe and other inevitable impurities.

Hereinafter, reasons for numerical limitations on the contents of alloy components in the embodiment of the present disclosure will be described. Hereinafter, the unit is wt% unless otherwise stated.

C: more than 0% and not more than 0.3%, N: more than 0% and not more than 0.3%

C and N bind to Cr contained in a steel to form a Cr carbonitride, and thus a region in which Cr is locally depleted may be formed, thereby increasing a risk of deterioration of corrosion resistance. Therefore, it is preferable to control the contents of the two elements as low as possible. Thus, the contents of C and N are controlled in the present disclosure such that the C content is more than 0% and not more than 0.3%, and the N content is more than 0% and not more than 0.3.

Si: more than 0% and not more than 0.7%

Si is an element effective on deoxidization. However, an excess of Si may deteriorate toughness and formability, and an oxide $SiO_2$ generated during an annealing process deteriorates electrical conductivity and hydrophilicity. In consideration thereof, the Si content is controlled to be more than 0% and not more than 0.7% in the present disclosure.

Mn: more than 0% and not more than 10%

Mn is an element effective on deoxidization. However, MnS that is an Mn inclusion reduces corrosion resistance, and thus the Mn content is controlled to be more than 0% and not more than 10% in the present disclosure.

P: more than 0% and not more than 0.04%

Because P deteriorates not only corrosion resistance but also toughness, the P content is controlled to be more than 0% and not more than 0.04% in the present disclosure.

S: more than 0% and not more than 0.02%

S binds to Mn contained in a steel to form stable MnS, and the formed MnS serves as an origin of corrosion to deteriorate corrosion resistance, and thus it is preferable to control the S content as low as possible. In consideration thereof, the S content may be controlled to be more than 0% and not more than 0.02% in the present disclosure.

Cr: 15 to 34%

Cr is an element enhancing corrosion resistance. Cr is actively added to obtain corrosion resistance in a strongly acidic operating environment of a fuel cell. However, an excess of Cr may deteriorate toughness, and thus the Cr content is controlled from 15 to 34% in the present disclosure in consideration thereof.

Ni: 25% or less

Ni is an element stabilizing an austenite phase and enhancing corrosion resistance. In addition, Ni is generally contained in more than a certain amount in austenitic stainless steels and ferritic-austenitic dual-phase stainless steels. However, an excess of Ni may deteriorate workability, and thus the Ni content is controlled to be 25% or less in the present disclosure in consideration thereof.

A lower limit of Ni is not particularly limited and Ni may be appropriately contained according to the steel type. For example, a lower limit of the Ni content in austenitic stainless steels or ferritic-austenitic dual-phase stainless steels may be 2.0% or more. For example, a lower limit of the Ni content in ferritic stainless steels may be less than 2.0%, preferably, 1.0% or less, more preferably, 0.01% or less.

In addition, the stainless steel according to an embodiment may include as optional alloying elements, if required, in percent by weight (wt%), at least one selected from more than 0.01% and not more than 1.5% of Cu, more than 0.01% and not more than 0.6% of V, 0.01 to 5.0% of Mo, 0.01 to 0.5% of Ti, and 0.01 to 0.4% of Nb, in addition to the above-described alloying elements. However, it is necessary to note that the compositions of the optional alloying elements is only intended to assist understanding of the present disclosure in more detail and are not intended to limit the scope of the present disclosure.

Cu: more than 0.01% and not more than 1.5%

Cu is an element enhancing corrosion resistance. However, when an excess of Cu is added, Cu is eluted to deteriorate performance of a fuel cell. Thus, the Cu content is controlled to be more than 0% and not more than 1.5% in the present disclosure in consideration thereof.

V: more than 0.01% and not more than 0.6%

V is an element enhancing the lifespan of a fuel cell by inhibiting elution of Fe in an operating environment of the fuel cell. However, an excess of V deteriorates toughness, and thus the V content is controlled to be more than 0.01% and not more than 0.6% in the present disclosure in consideration thereof.

Mo: 0.01 to 5.0%

Mo is an element enhancing corrosion resistance. However, an excess of Mo deteriorates workability, and thus the Mo content is controlled to be from 0.01 to 5.0%.

Ti: 0.01 to 0.5%, Nb: 0.01 to 0.4%

Ti and Nb bind to C and N contained in a steel to form a stable carbonitride and inhibit formation of a region in which Cr is locally depleted, thereby enhancing corrosion resistance. However, an excess of Ti and Nb deteriorates toughness, and thus the Ti content is controlled in the range of 0.01 to 0.5% and the Nb content is controlled in the range of 0.01 to 0.4% in the present disclosure in consideration thereof.

The remaining component of the composition of the present disclosure is iron (Fe). However, the composition may include unintended impurities inevitably incorporated from raw materials or surrounding environments, and thus addition of other alloy components is not excluded. The impurities are not specifically mentioned in the present disclosure, as they are known to any person skilled in the art of manufacturing.

A method of manufacturing a stainless steel having excellent surface electrical conductivity for a fuel cell separator according to the present disclosure is not particularly limited, as long as the value of the surface oxide atomic ratio (1) is controlled to 0.08 or more.

According to an embodiment of the present disclosure, the stainless steel having excellent surface electrical conductivity for a fuel cell separator may be manufactured by surface-treating a cold-rolled steel sheet prepared according to a common stainless steel-manufacturing method. The surface treatment according to an embodiment may be performed by two steps, and a primary surface treatment may include immersing the cold-rolled stainless steel sheet in a nonoxidizing acid solution or performing an electrolytic treatment after the immersing. The secondary surface treatment may include immersing the cold-rolled stainless steel sheet in an oxidizing acid solution.

The primary surface treatment according to an embodiment of the present disclosure may include immersing the cold-rolled stainless steel sheet in a nonoxidizing acid solution for 5 seconds or more, or performing an electrolytic treatment at a current density of 0.1 A/cm$^2$ for 5 seconds or more after the immersing. In this case, the nonoxidizing acid solution may be a 5 wt% or more hydrochloric acid (HCl) or sulfuric acid solution ($H_2SO_4$) at 50°C or higher.

The secondary surface treatment according to an embodiment of the present disclosure may include immersing the cold-rolled stainless steel sheet in an oxidizing acid solution for 5 seconds or more. In this case, the oxidizing acid solution may be a 5 wt% or more nitric acid ($HNO_3$) solution at 50°C or higher.

Hereinafter, the present disclosure will be described in more detail through examples. However, it is necessary to note that the following examples are only intended to illustrate the present disclosure in more detail and are not intended to limit the scope of the present disclosure. This is because the scope of the present disclosure is determined by matters described in the claims and able to be reasonably inferred therefrom.

Examples

Steel types having the compositions of alloying elements shown in Table 1 were prepared as slabs by steel making and continuous casting. Then, the manufactured slabs were hot-rolled to a thickness of 4.5 mm at 1200°C to obtain hot-rolled steel sheets. The hot-rolled steel sheets were repeatedly heated at 1050°C and cold-rolled and annealed at 1000°C to prepare 0.15 mm-thick cold-rolled steel sheets.

In Table 1 below, Steels 1 to 9 are inventive steels. Steels 1 to 3 are ferritic stainless steel, Steels 4 to 6 are austenitic stainless steels, Steels 7 to 9 are ferritic-austenitic dual-phase stainless steels. Steels 10 and 11 are comparative steels in which the Cr content is less than 15 wt%.

Table 1

| Steel type | Alloying element (wt%) | | | | | | | | | | | | |
|---|---|---|---|---|---|---|---|---|---|---|---|---|---|
| | C | N | Si | Mn | P | S | Cr | Ni | Cu | V | Mo | Nb | Ti |
| Steel 1 | 0.01 | 0.01 | 0.2 | 0.3 | 0.009 | 0.008 | 15.8 | - | - | - | - | - | 0.15 |
| Steel 2 | 0.01 | 0.011 | 0.14 | 0.25 | 0.01 | 0.009 | 22 | - | - | - | 0.18 | 0.35 | 0.03 |
| Steel 3 | 0.008 | 0.012 | 0.11 | 0.15 | 0.03 | 0.004 | 30.2 | - | - | 0.32 | - | 0.18 | 0.11 |
| Steel 4 | 0.12 | 0.04 | 0.65 | 0.9 | 0.025 | 0.005 | 17 | 6.3 | 0.02 | - | - | - | 0.01 |
| Steel 5 | 0.02 | 0.05 | 0.5 | 1.12 | 0.02 | 0.002 | 16.4 | 10 | 0.2 | - | 2 | - | - |
| Steel 6 | 0.04 | 0.08 | 0.5 | 1.4 | 0.015 | 0.001 | 25.6 | 19.8 | 0.4 | - | 0.09 | - | - |
| Steel 7 | 0.028 | 0.25 | 0.7 | 3.1 | 0.01 | 0.001 | 20.1 | 0.92 | 0.84 | - | 0.01 | - | - |
| Steel 8 | 0.016 | 0.14 | 0.43 | 1.43 | 0.013 | 0.001 | 23.1 | 4.11 | 0.25 | - | 0.29 | - | - |
| Steel 9 | 0.015 | 0.28 | 0.34 | 0.82 | 0.012 | 0.001 | 25.2 | 6.3 | - | - | 3.78 | - | - |
| Steel 10 | 0.01 | 0.012 | 0.18 | 0.28 | 0.008 | 0.007 | 14.8 | - | - | - | - | - | 0.15 |
| Steel 11 | 0.10 | 0.035 | 0.45 | 0.8 | 0.015 | 0.005 | 13 | 9 | 0.15 | - | - | - | 0.1 |

The cold-rolled steel sheets manufactured according to Table 1 were surface-treated under surface treatment conditions shown in Table 2 below. Surface treatment was performed by primary and secondary surface treatments under the conditions A to H shown in Table 2. The primary surface treatment was performed by immersing the cold-rolled steel sheet in a sulfuric acid solution, as a nonoxidizing acid solution, or performing an electrolytic treatment after the immersing. The secondary surface treatment was performed by immersing the stainless steel in a nitric acid solution, as an oxidizing acid solution. As an example of the surface treatment shown in Table 2 for better understanding, the cold-rolled stainless steel sheet of Inventive Example 1 of Table 2 was immersed in an 8 wt% sulfuric acid solution at 50°C for 5 seconds for the primary surface treatment (A), and then immersed in a 10 wt% nitric acid solution at 50°C for 9 seconds for the secondary surface treatment (D).

The value of the surface oxide atomic ratio (1) of Table 2 is a value obtained using Expression (1) below, as a value obtained by measuring the surface of each of the stainless steels according to inventive examples and comparative examples by X-ray angle-resolved photoemission spectroscopy using an Al-K$\alpha$ X-ray source under the condition where a take-off angle of photoelectrons is as shown in Table 2.

$$(1) \quad \frac{\text{sum of atomic concentrations (at\%) of Cr in Cr hydroxide}}{\text{sum of atomic concentrations (at\%) of metal elements in total oxides and hydroxides}}$$

The value of the surface oxide atomic ratio (1) was measured using a method described below. First, analysis was conducted under the take-off angle conditions of Table 2 using the PHI Quantera II device, peaks were separated from the binding energy of the metal oxide (MO), the Cr oxide, the Cr hydroxide, the Fe oxide, and the Fe hydroxide using the CasaXPS software from the analysis results, and atomic concentrations were calculated using the same.

The 'sum of atomic concentrations (at%) of Cr in Cr hydroxide' used to obtain the value of the surface oxide atomic ratio (1) was obtained by separating peaks from the binding energy of the Cr hydroxide, and fitting the peaks on a Cr 2p spectrum. In this regard, the Cr hydroxide represents CrOOH, $Cr(OH)_2$, or $Cr(OH)_3$.

The 'sum of atomic concentrations (at%) of metal elements in total oxides and hydroxides' used to obtain the value of the surface oxide atomic ratio (1) was obtained by adding a 'sum of atomic concentrations (at%) of Cr in Cr oxide', a 'sum of atomic concentrations (at%) of metal elements in metal oxide (MO)' and a 'sum of atomic concentrations (at%) of Fe in Fe oxide and Fe hydroxide' to the above-described sum of atomic concentrations (at%) of Cr in the Cr hydroxide.

The 'sum of atomic concentrations (at%) of Cr in Cr oxide' was obtained by separating peaks from the binding energy of Cr from the Cr oxide, and fitting the peaks on a Cr 2p spectrum. The 'sum of atomic concentrations (at%) of metal elements in metal oxide (MO)' used was obtained by separating peaks from the binding energy of the metal oxide (MO), and fitting the peaks on a spectrum of each metal (M). In this regard, the metal oxide (MO) includes a mixed oxide, M represents an alloying element other than Cr and Fe or a combination thereof in the matrix; and O represents oxygen. The 'sum of atomic concentrations (at%) of Fe in Fe oxide and Fe hydroxide' was obtained by separating peaks from the binding energy of the Fe oxide and the Fe hydroxide, and fitting the peaks on an Fe 2p spectrum.

The bandgap energy of Table 2 refers to a bandgap energy of the surface oxide layer. The bandgap energy of the surface oxide layer was measured by using a current sensing atomic force microscope (Mode No. Keysight 9500). The stainless steels of the inventive examples and comparative examples were cut into a sample with a size of 1 cm $\times$ 1 cm, and the bandgap energy was measured with a current tip mode while a bias applied by a load of 20 nN changes from -10 V to 10 V in a nitrogen atmosphere with a relative humidity of 18% such that the surface oxide layer is measured in an inactive state. A width of a region in which a current detected while the applied bias changes from -10 V to 10 V was "0" as the bandgap energy by measuring 5 times an area of 50 $\mu$m $\times$ 50 $\mu$m in the sample. In this case, a silicon tip (Si tip) coated with platinum having a thickness of 30 nm was used as a tip.

Table 2

|  | Steel type | Primary surface treatment | Secondary surface treatment | Take-off angle condition of photoelectron | | | Bandgap energy (eV) |
|---|---|---|---|---|---|---|---|
|  |  |  |  | Value (1) at 12° | Value (1) at 44° | Value (1) at 85° |  |
| Inventive Example 1 | Steel 1 | A | D | 0.22 | 0.23 | 0.2 | 0 |
| Inventive Example 2 | Steel 1 | B | D | 0.28 | 0.3 | 0.25 | 0 |
| Comparative Example 1 | Steel 1 | E | D | 0.06 | 0.04 | 0.03 | 2.9 |
| Inventive Example 3 | Steel 2 | B | D | 0.23 | 0.22 | 0.2 | 0.3 |
| Inventive Example 4 | Steel 2 | A | D | 0.22 | 0.21 | 0.21 | 0.5 |
| Comparative Example 2 | Steel 2 | F | D | 0.07 | 0.05 | 0.03 | 3.5 |
| Inventive Example 5 | Steel 3 | B | D | 0.2 | 0.23 | 0.21 | 1 |
| Inventive Example 6 | Steel 3 | C | D | 0.32 | 0.22 | 0.23 | 0 |
| Comparative Example 3 | Steel 3 | F | - | 0.06 | 0.05 | 0.03 | 3.2 |
| Inventive Example 7 | Steel 4 | A | D | 0.3 | 0.31 | 0.3 | 0.2 |
| Inventive Example 8 | Steel 4 | C | D | 0.28 | 0.27 | 0.28 | 0.22 |
| Comparative Example 4 | Steel 4 | - | D | 0.075 | 0.06 | 0.07 | 2.9 |
| Inventive Example 9 | Steel 5 | B | D | 0.28 | 0.27 | 0.25 | 0.23 |

(continued)

| | Steel type | Primary surface treatment | Secondary surface treatment | Take-off angle condition of photoelectron | | | Bandgap energy (eV) |
|---|---|---|---|---|---|---|---|
| | | | | Value (1) at 12° | Value (1) at 44° | Value (1) at 85° | |
| Inventive Example 10 | Steel 5 | B | D | 0.08 | 0.09 | 0.08 | 1.8 |
| Comparative Example 5 | Steel 5 | F | H | 0.05 | 0.04 | 0.04 | 4.5 |
| Inventive Example 11 | Steel 6 | A | D | 0.43 | 0.43 | 0.41 | 0 |
| Inventive Example 12 | Steel 6 | B | D | 0.41 | 0.42 | 0.43 | 0 |
| Comparative Example 6 | Steel 6 | G | - | 0.05 | 0.04 | 0.02 | 6.5 |
| Inventive Example 13 | Steel 7 | C | D | 0.35 | 0.33 | 0.32 | 0.1 |
| Inventive Example 14 | Steel 7 | A | D | 0.36 | 0.36 | 0.37 | 0 |
| Comparative Example 7 | Steel 7 | F | - | 0.03 | 0.04 | 0.02 | 7.6 |
| Inventive Example 15 | Steel 8 | A | D | 0.53 | 0.55 | 0.6 | 0 |
| Inventive Example 16 | Steel 8 | C | D | 0.6 | 0.75 | 0.75 | 0 |
| Comparative Example 8 | Steel 8 | G | H | 0.03 | 0.02 | 0.04 | 6.6 |
| Inventive Example 17 | Steel 9 | A | D | 0.13 | 0.12 | 0.11 | 1.2 |
| Inventive Example 18 | Steel 9 | B | D | 0.08 | 0.082 | 0.08 | 1.9 |
| Comparative Example 9 | Steel 9 | - | H | 0.06 | 0.05 | 0.06 | 3.3 |
| Comparative Example 10 | Steel 10 | E | H | 0.04 | 0.04 | 0.03 | 4.5 |
| Comparative Example 11 | Steel 10 | E | H | 0.055 | 0.06 | 0.051 | 3.2 |
| Comparative Example 12 | Steel 11 | F | - | 0.05 | 0.051 | 0.045 | 3.4 |
| Comparative Example 13 | Steel 11 | A | D | 0.06 | 0.05 | 0.04 | 2.5 |

A: immersing in an 8 wt% sulfuric acid solution at 50°C for 5 seconds,

B: immersing in a 10 wt% sulfuric acid solution at 50°C for 6 seconds,

C: immersing in a 10 wt% sulfuric acid solution at 50°C, followed by electrolytic treatment at 0.2 A/cm$^2$ for 10 seconds,

D: immersing in a 10 wt% nitric acid solution at 50°C for 9 seconds,

E: immersing in an 8 wt% sulfuric acid solution at 50°C for 3 seconds,

F: immersing in a 10 wt% sulfuric acid solution at 50°C for 3 seconds,

(continued)

| | Steel type | Primary surface treatment | Secondary surface treatment | Take-off angle condition of photoelectron | | | Bandgap energy (eV) |
|---|---|---|---|---|---|---|---|
| | | | | Value (1) at 12° | Value (1) at 44° | Value (1) at 85° | |
| G: immersing in a 10 wt% sulfuric acid solution at 50°C, followed by electrolytic treatment at 0.2 A/cm$^2$ for 4 second, H: immersing in a 10 wt% nitric an acid solution at 50°C for 3 seconds | | | | | | | |

Hereinafter, the stainless steels according to the inventive examples and comparative examples were comparatively evaluated referring to Table 2. Referring to the results of Table 2, Inventive Examples 1 to 18 satisfied the value of the surface oxide atomic ratio (1) of 0.08 or more under surface treatment conditions according to the present disclosure, i.e., under the condition where the take-off angle of photoelectrons was from 12° to 85°, and thus the bandgap energy of the surface oxide layer was not more than 2.0 eV. Furthermore, referring to Inventive Examples 1, 2, 6, 11, 12, 14, 15, and 16, the value of the surface oxide atomic ratio (1) may be 0.2 or more for formation of an ohmic contact between the surface oxide layer and the matrix by adjusting the bandgap energy of the surface oxide layer to 0 eV.

In Comparative Examples 1 and 2, the primary surface treatment was performed for a too short period of time of 3 seconds, and the value of the surface oxide atomic ratio (1) was less than 0.08 under the condition where the take-off angle of photoelectrons was 12°, 44°, and 85°. As a result, the bandgap energy of the surface oxide layer exceeded 2.0 eV.

In Comparative Example 3, the primary surface treatment was performed for a too short period of time of 3 seconds and the secondary surface treatment was not performed. Also, the value of the surface oxide atomic ratio (1) was less than 0.08 under the condition where the take-off angle of photoelectrons was 12°, 44°, and 85°. As a result, the bandgap energy of the surface oxide layer exceeded 2.0 eV.

In Comparative Example 4, the primary surface treatment was not performed and the value of the surface oxide atomic ratio (1) was less than 0.08 under the condition where the take-off angle of photoelectrons was 12°, 44°, and 85°. As a result, the bandgap energy of the surface oxide layer exceeded 2.0 eV.

In Comparative Example 5, the primary and secondary surface treatments were performed for a too short period of time of 3 seconds, and the value of the surface oxide atomic ratio (1) was less than 0.08 under the condition where the take-off angle of photoelectrons was 12°, 44°, and 85°. As a result, the bandgap energy of the surface oxide layer exceeded 2.0 eV.

In Comparative Examples 6 and 7, the primary surface treatment was performed for a too short period of time of 3 seconds, and secondary surface treatment was not performed. Also, the value of the surface oxide atomic ratio (1) was less than 0.08 under the condition where the take-off angle of photoelectrons was 12°, 44°, and 85°. As a result, the bandgap energy of the surface oxide layer exceeded 2.0 eV.

In Comparative Example 8, the primary and secondary surface treatments were performed for a too short period of time of 3 seconds, and the value of the surface oxide atomic ratio (1) was less than 0.08 under the condition where the take-off angle of photoelectrons was 12°, 44°, and 85°. As a result, the bandgap energy of the surface oxide layer exceeded 2.0 eV.

In Comparative Example 9, the primary surface treatment was not performed, and the secondary surface treatment was performed for a too short period of time of 3 seconds. Also, the value of the surface oxide atomic ratio (1) was less than 0.08 under the condition where the take-off angle of photoelectrons was 12°, 44°, and 85°. As a result, the bandgap energy of the surface oxide layer exceeded 2.0 eV.

In Comparative Examples 10 and 11, the primary and secondary surface treatments were performed for a too short period of time of 3 seconds. Also, the Cr content was less than 15 wt%, and the value of the surface oxide atomic ratio (1) was less than 0.08 under the condition where the take-off angle of photoelectrons was 12°, 44°, and 85°. As a result, the bandgap energy of the surface oxide layer exceeded 2.0 eV.

In Comparative Example 12, the primary surface treatment was not performed, and the secondary surface treatment were performed for a too short period of time of 3 seconds. Also, the Cr content was less than 15 wt%, and the value of the surface oxide atomic ratio (1) was less than 0.08 under the condition where the take-off angle of photoelectrons was 12°, 44°, and 85°. As a result, the bandgap energy of the surface oxide layer exceeded 2.0 eV.

In Comparative Example 13, although the primary and secondary surface treatments were performed for 5 seconds or more, the Cr content was less than 15 wt% and the value of the surface oxide atomic ratio (1) was less than 0.08 under the condition where the take-off angle of photoelectrons was 12°, 44°, and 85°. As a result, the bandgap energy of the surface oxide layer exceeded 2.0 eV.

FIGS. 1A and 1B are graphs illustrating relationship between the bandgap energy and the value of the surface oxide atomic ratio (1) based on the results shown in Table 2. The take-off angles of photoelectrons were 12° and 85°, respectively in FIGS. 1A and 1B. The horizontal axis of FIG. 1A and 1B indicates the value of the surface oxide atomic ratio (1), and the vertical axis indicates the bandgap energy (eV).

Referring to FIGS. 1A and 1B, it may be confirmed that the bandgap energy is 2 eV or less when the value of the surface oxide atomic ratio (1) is not less than 0.08, which is a reference point. When the value of the surface oxide atomic ratio (1) is less than 0.08, the bandgap energy rapidly increases, thereby exceeding 2 eV. Referring to this, it may be seen that the bandgap energy may be adjusted to 2 eV or less by controlling the value of the surface oxide atomic ratio (1) to 0.08 or more. In addition, referring to FIGS. 1A and 1B, it may be confirmed that the value of the surface oxide atomic ratio (1) may preferably be adjusted to 0.08 or more to obtain a bandgap energy of 0 eV.

In addition, regions marked by dashed lines in FIGS. 1A and 1B indicate regions in which the value of the surface oxide atomic ratio (1) is not less than 0.08 and the bandgap energy is not more than 2 eV. Referring to FIGS. 1A and 1B, all of the inventive examples are included in the regions marked by the dashed lines in FIGS. 1A and 1B, and thus it may be seen that a stainless steel having excellent surface electrical conductivity for a fuel cell separator and having a bandgap energy of 2 eV or less may be provided by controlling the value of the surface oxide atomic ratio (1) to 0.08 or more.

Based on the results of the above-described examples, the present disclosure may provide a stainless steel having excellent surface electrical conductivity for a fuel cell separator and a manufacturing method thereof, the stainless steel applicable to materials for electrical contacts and materials for fuel cell separators by making the surface oxide layer, which is formed on the surface of the stainless steel and has semiconductor properties, into a conductor.

In addition, a stainless steel having excellent surface electrical conductivity for a fuel cell separator and having a bandgap energy of a surface oxide layer of 2 eV or less may be provided by controlling the value of the surface oxide atomic ratio (1) to 0.08 or more, measured on the surface of the stainless steel by X-ray angle-resolved photoemission spectroscopy using an Al-K$\alpha$ X-ray source under the condition where a take-off angle of photoelectrons is from 12° to 85°.

While the present disclosure has been particularly described with reference to exemplary embodiments, it should be understood by those of skilled in the art that various changes in form and details may be made without departing from the spirit and scope of the present disclosure.

[Industrial Applicability]

The stainless steel having excellent surface electrical conductivity according to the present disclosure may be applied to fuel cell separators, and the like.

**Claims**

1. A stainless steel having excellent surface electrical conductivity for a fuel cell separator,

   wherein a value of the following surface oxide atomic ratio (1) is 0.08 or more, as measured on a surface of the stainless steel containing 15 wt% or more of Cr by X-ray angle-resolved photoemission spectroscopy using an Al-K$\alpha$ X-ray source under the condition where a take-off angle of photoelectrons is from 12° to 85°:

$$(1) \quad \frac{\text{sum of atomic concentrations (at\%) of Cr in Cr hydroxide}}{\text{sum of atomic concentrations (at\%) of metal elements in total oxides and hydroxides}}$$

   wherein the Cr hydroxide represents $CrOOH$, $Cr(OH)_2$, or $Cr(OH)_3$, and
   the total oxides and hydroxides include a Cr oxide, the Cr hydroxide, an Fe oxide, an Fe hydroxide, and a metal oxide (MO), and the metal oxide (MO) includes a mixed oxide, wherein M represents an alloying element other than Cr and Fe or a combination thereof in a matrix, and O represents oxygen.

2. The stainless steel according to claim 1, wherein the value of the surface oxide atomic ratio (1) is 0.2 or more.

3. The stainless steel according to claim 1, wherein a bandgap energy of a surface oxide layer of the stainless steel is 2 eV or less.

4. The stainless steel according to claim 1, wherein the surface oxide layer of the stainless steel forms an ohmic contact with the matrix.

5. A method for manufacturing the stainless steel having excellent surface electrical conductivity for a fuel cell separator according to claim 1, the method comprising:

a primary surface treatment performed by immersing a cold-rolled stainless steel sheet in a nonoxidizing acid solution, or conducting an electrolytic treatment after the immersing, and
a secondary surface treatment performed by immersing the cold-rolled stainless steel sheet in an oxidizing acid solution.

6. The method according to claim 5, wherein the primary surface treatment comprises immersing the cold-rolled stainless steel sheet in the nonoxidizing acid solution for 5 seconds or more, or performing an electrolytic treatment with a current density of 0.1 A/cm$^2$ or more for 5 seconds or more after the immersing, and
the nonoxidizing acid solution is a 5 wt% or more hydrochloric acid or sulfuric acid solution at 50°C or higher.

7. The method according to claim 5, wherein the secondary surface treatment comprises immersing the cold-rolled stainless steel sheet in the oxidizing acid solution for 5 seconds or more, and
the oxidizing acid solution is a 5 wt% or more nitric acid solution at 50°C or higher.

【FIG. 1A】

VALUE OF SURFACE OXIDE ATOMIC RATIO (1)

【FIG. 1B】

VALUE OF SURFACE OXIDE ATOMIC RATIO (1)

## INTERNATIONAL SEARCH REPORT

International application No.

**PCT/KR2020/014221**

### A. CLASSIFICATION OF SUBJECT MATTER

**H01M 8/021**(2016.01)i; **H01M 8/0228**(2016.01)i; **C22C 38/18**(2006.01)i; **C22C 32/00**(2006.01)i; **C23C 22/50**(2006.01)i; **C25F 1/00**(2006.01)i

According to International Patent Classification (IPC) or to both national classification and IPC

### B. FIELDS SEARCHED

Minimum documentation searched (classification system followed by classification symbols)

H01M 8/021(2016.01); C22C 38/00(2006.01); C22C 38/22(2006.01); C22C 38/40(2006.01); C23F 1/16(2006.01); H01M 8/02(2006.01); H01M 8/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 스테인리스강(stainless steel), 전기전도성(electroconductive), 크롬(chrom), 밴드갭 에너지(band gap energy), 표면(surface)

### C. DOCUMENTS CONSIDERED TO BE RELEVANT

| Category* | Citation of document, with indication, where appropriate, of the relevant passages | Relevant to claim No. |
|---|---|---|
| Y | KR 10-2017-0035374 A (POSCO) 31 March 2017 (2017-03-31)<br>See abstract; claims 1 and 10-14; and paragraphs [0080]-[0108]. | 1-7 |
| Y | KR 10-1588093 B1 (POSCO) 22 January 2016 (2016-01-22)<br>See abstract; and claim 1. | 1-7 |
| A | KR 10-0777123 B1 (HYUNDAI HYSCO CO., LTD.) 19 November 2007 (2007-11-19)<br>See abstract; claim 1; paragraphs [0097] and [0134]-[0137]; and figure 7. | 1-7 |
| A | JP 2004-149920 A (JFE STEEL K.K.) 27 May 2004 (2004-05-27)<br>See abstract; claim 1; and paragraph [0025]. | 1-7 |
| A | KR 10-0844023 B1 (HYUNDAI HYSCO CO., LTD.) 04 July 2008 (2008-07-04)<br>See claims 1 and 2. | 1-7 |

☐ Further documents are listed in the continuation of Box C.　　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 March 2021** | **22 March 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2020/014221**

| Patent document cited in search report | | | Publication date (day/month/year) | Patent family member(s) | | | Publication date (day/month/year) |
|---|---|---|---|---|---|---|---|
| KR | 10-2017-0035374 | A | 31 March 2017 | CA | 2997544 | A1 | 30 March 2017 |
| | | | | CN | 107925040 | A | 17 April 2018 |
| | | | | EP | 3363926 | A1 | 22 August 2018 |
| | | | | JP | 2018-534416 | A | 22 November 2018 |
| | | | | JP | 6726735 | B2 | 22 July 2020 |
| | | | | US | 2018-0219201 | A1 | 02 August 2018 |
| | | | | WO | 2017-052047 | A1 | 30 March 2017 |
| KR | 10-1588093 | B1 | 22 January 2016 | KR | 10-2015-0074768 | A | 02 July 2015 |
| KR | 10-0777123 | B1 | 19 November 2007 | CN | 101646807 | A | 10 February 2010 |
| | | | | CN | 101646807 | B | 14 September 2011 |
| | | | | CN | 102061509 | A | 18 May 2011 |
| | | | | CN | 102061509 | B | 28 August 2013 |
| | | | | EP | 2137339 | A1 | 30 December 2009 |
| | | | | EP | 2137339 | B1 | 05 September 2018 |
| | | | | EP | 3205747 | A1 | 16 August 2017 |
| | | | | JP | 2010-525522 | A | 22 July 2010 |
| | | | | JP | 2013-065562 | A | 11 April 2013 |
| | | | | JP | 5307121 | B2 | 02 October 2013 |
| | | | | JP | 5591302 | B2 | 17 September 2014 |
| | | | | US | 2010-0129697 | A1 | 27 May 2010 |
| | | | | US | 8828258 | B2 | 09 September 2014 |
| | | | | WO | 2008-130078 | A1 | 30 October 2008 |
| JP | 2004-149920 | A | 27 May 2004 | CA | 2503030 | A1 | 21 April 2005 |
| | | | | CA | 2503030 | C | 12 May 2009 |
| | | | | JP | 4496750 | B2 | 07 July 2010 |
| | | | | US | 2006-0105218 | A1 | 18 May 2006 |
| | | | | US | 8900379 | B2 | 02 December 2014 |
| | | | | WO | 2005-035816 | A1 | 21 April 2005 |
| KR | 10-0844023 | B1 | 04 July 2008 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020140081161
- KR 1020130099148
- JP 2004149920 A